# EUROPÄISCHE PATENTSCHRIFT

(11) **EP 3 996 960 B1**
(45) Veröffentlichungstag und Bekanntmachung des Hinweises auf die Patenterteilung: **13.12.2023**
(21) Anmeldenummer: 20722561.6
(22) Anmeldetag: 28.04.2020
(51) Int. Cl.: B60T 8/26, B60T 8/36, B60T 17/02, B60T 17/04

(54) **PUMPENGEHÄUSE EINES HYDRAULIKAGGREGATS MIT EINER AUSLASSVENTILAUFNAHME**
PUMP HYDRAULIC ARRANGEMENT WITH AN OUTLET VALVE
AGGRÉGAT HYDRAULIQUE DE POMPE AVEC UNE VALVE DE RÉDUCTION DE PRESSION

(30) Priorität: 11.07.2019 DE 102019210260
(43) Veröffentlichungstag der Anmeldung: 18.05.2022
(73) Patentinhaber: Robert Bosch GmbH, 70442 Stuttgart (DE)
(72) Erfinder: WELLHOEFER, Matthias Marcus, 70499 Stuttgart (DE); HAECKER, Juergen, 71701 Schwieberdingen (DE)
(86) Internationale Anmeldenummer: PCT/EP2020/061731
(87) Internationale Veröffentlichungsnummer: WO 2021/004671

(56) Entgegenhaltungen:
- EP-A1- 0 524 440
- DE-A1- 10 237 163

## Beschreibung

### Stand der Technik

Die Erfindung betrifft ein Pumpengehäuse eines Hydraulikaggregats einer Fahrzeugbremsanlage mit mindestens einem Radbremszylinderanschluss zum Anschließen eines Radbremszylinders an dem Pumpengehäuse, mit einer zum einzelnen Radbremszylinderanschluss gehörigen Auslassventilaufnahme zum Aufnehmen eines Auslassventils, das zum Auslassen von Bremsfluid aus dem Radbremszylinder in das Pumpengehäuse vorgesehen ist und einen Ventileinlass umfasst, der mit einem Schließkörper mit einer zugehörigen Schließkraft zu verschließen ist, wobei die Auslassventilaufnahme einen Einlass zum Einlassen von Bremsfluid von dem Radbremszylinder in das Auslassventil aufweist. Ferner betrifft die Erfindung die Verwendung eines derartigen Pumpengehäuses in einem Hydraulikaggregat einer Fahrzeugbremsanlage.

Hydraulikaggregate werden bei Kraftfahrzeugen, wie insbesondere bei Personenkraftwagen oder Lastkraftwagen verwendet, um an deren Bremssystem geregelte Bremsdrücke bereitzustellen. Insbesondere werden mit derartigen Hydraulikaggregaten Funktionen eines Antiblockiersystems (ABS), einer Antischlupfregelung (ASR) und/oder eines elektronischen Stabilitätsprogramms (ESP) realisiert. Dazu wird am Bremssystem an einem Hauptzylinder über ein Bremspedal Bremsdruck erzeugt. Zum Dosieren des Bremsdrucks weist das Hydraulikaggregat eine Pumpe mit mehreren Pumpenkolben, einen Motor zum Antreiben der Pumpe sowie mehrere Ventile auf. Die Ventile sind in der Regel elektromagnetisch gesteuert, so dass an einzelnen Bremsen oder Bremskreisen unterschiedliche Bremsdrücke bereitgestellt werden können. Für eine hydraulische Verbindung des Hydraulikaggregats mit Radbremszylindern an zugehörigen Radbremsen sind an dem Hydraulikaggregat Radbremszylinderanschlüsse ausgebildet.

Ein Pumpengehäuse eines solchen Hydraulikaggregats ist meist quaderförmig bzw. blockförmig aus Aluminium gestaltet und mit Bohrungen für die Anordnung der Bauelemente, insbesondere der Ventile, und der Leitungen versehen. Dabei ist mindestens eine als Bohrung gestaltete Auslassventilaufnahme vorgesehen. Darin ist ein Auslassventil zum Auslassen von Bremsfluid aus einem zugehörigen Radbremszylinder in das Pumpengehäuse aufgenommen. Dazu umfasst das Auslassventil einen Ventileinlass zum Einlassen des Bremsfluids in das Auslassventil und einen den Ventileinlass mit einer Schließkraft verschließenden Schließkörper. Dabei ist das Bremsfluid herkömmlich quer zur Schließkraft einströmend durch den Ventileinlass und einen daran angeordneten Einlass der Auslassventilaufnahme geführt.

Aus DE 102 37 163 A1 ist ein Gehäuseblock als Pumpengehäuse eines Hydraulikaggregats einer Fahrzeugbremsanlage bekannt. Der Gehäuseblock weist mindestens einen Radbremsanschluss zum Anschließen eines Radbremszylinders an dem Gehäuseblock, einen zum einzelnen Radbremsanschluss gehörigen Auslassventilaufnahmeraum zum Aufnehmen eines Auslassventils das zum Auslassen von Bremsfluid aus dem Radbremszylinder in den Gehäuseblock vorgesehen ist und einen Ventileinlass umfasst, der mit einem Schließkörper mit einer zugehörigen Schließkraft zu verschließen ist, wobei der Auslassventilaufnahmeraum einen Einlass zum Einlassen von Bremsfluid von dem Radbremszylinder in das Auslassventil aufweist.

Aus EP 0 524 440 A1 ist ein Gehäuseblock einer hydraulischen Bremsanlage für Kraftfahrzeuge bekannt. Wie im Gehäuseblock eine Auslassventilaufnahme für ein zugehöriges Auslassventil gestaltet ist, ist nicht näher beschrieben.

### Offenbarung der Erfindung

Erfindungsgemäß ist ein Pumpengehäuse eines Hydraulikaggregats einer Fahrzeugbremsanlage nach Anspruch 1 mit mindestens einem Radbremszylinderanschluss zum Anschließen eines Radbremszylinders an dem Pumpengehäuse, mit einer zum einzelnen Radbremszylinderanschluss gehörigen Auslassventilaufnahme zum Aufnehmen eines Auslassventils, das zum Auslassen von Bremsfluid aus dem Radbremszylinder in das Pumpengehäuse vorgesehen ist und einen Ventileinlass umfasst, der mit einem Schließkörper mit einer zugehörigen Schließkraft zu verschließen ist, wobei die Auslassventilaufnahme einen Einlass zum Einlassen von Bremsfluid von dem Radbremszylinder in das Auslassventil aufweist, geschaffen. Dabei ist der Einlass dazu angepasst, das Bremsfluid beim Einlassen in das Auslassventil in einer zur Schließkraft entgegengesetzt gerichteten Strömungsrichtung zu führen, wenn das Auslassventil in der Auslassventilaufnahme aufgenommen ist.

Mit dem erfindungsgemäß angepassten Einlass der Auslassventilaufnahme ist das Bremsfluid bei einem weiterführenden bzw. nachfolgenden Einlassen durch den Ventileinlass in das Auslassventil axial gegen die Schließkraft strömend geführt. Damit wirkt das Bremsfluid mit seiner Strömungsrichtung und einer damit wirkenden Strömungskraft direkt axial gegen die Schließkraft mit ihrem Kraftvektor. Direkt axial bedeutet, dass das Bremsfluid nicht erst nach und mittels einer vorhergehenden Umlenkung anhand weiterer Bauteile im Auslassventil axial gegen die Schließkraft des Schließkörpers drängt. Eine solche Umlenkung ist in herkömmlich regelbaren Auslassventilen bekannt, bei denen das Bremsfluid quer zur Schließkraft durch einen herkömmlichen Einlass und Ventileinlass einströmt. Zum Umlenken sind im Inneren des Auslassventils aufwändig herzustellende Umlenkbauteile vorgesehen, mit denen das quer zur Schließkraft einströmende Bremsfluid in seinem Strömungsweg axial gegen die Schließkraft wirkend umgelenkt ist.

Im Gegensatz dazu ist mit dem erfindungsgemäß angepassten Einlass erreicht, dass das Bremsfluid ohne ansonsten durch die Umlenkung verursachte Reibungs-, Druck- und Energieverluste direkt axial gegen die Schließkraft wirkt. Damit strömt das Bremsfluid beim Einströmen durch den Einlass und durch den am Einlass anzuordnenden Ventileinlass besonders energieeffizient axial gegen den Schließkörper. Damit drückt das Bremsfluid den Schließkörper sowie einen insbesondere damit kraftübertragend gekoppelten Stößel in Längsrichtung des Stößels vom Ventileinlass weg.

Zusätzlich zu der derartigen Energieeffizienz ist es von besonderem Vorteil, dass mittels des erfindungsgemäß angepassten Einlasses ein Auslassventil in die Auslassventilaufnahme aufgenommen werden kann, das regelbar ist. Regelbar bedeutet insbesondere, dass das Bremsfluid in seiner Durchflussmenge pro Zeiteinheit durch das Auslassventil je nach Bedarf angepasst werden kann. Für eine solche Regelbarkeit des Auslassventils, mit der gezielt und geregelt ein Bremsdruck am Radbremszylinder abzulassen ist, ist ein Anströmen des Schließkörpers axial entgegen seiner Schließkraft erforderlich. Ein solches Anströmen ist mit dem erfindungsgemäß angepassten Einlass nun auf einfache Art und Weise möglich. Damit kann das Auslassventil bautechnisch einfach ohne aufwändige Umlenkbauteile gestaltet sowie in die Auslassventilaufnahme eingebracht werden und ist trotz seiner einfachen Bauweise regelbar.

Somit ist mit dem erfindungsgemäßen Pumpengehäuse eine kostenoptimale Lösung zum Umsetzen von regelbaren Auslassventilen des Hydraulikaggregats einer Fahrzeugbremsanlage bzw. eines Bremsregelsystems geschaffen. Mit einem solch regelbaren Auslassventil kann beim Auslassen von Bremsfluid aus dem Radbremszylinder in das Pumpengehäuse der Bremsdruck an dem Radbremszylinder gezielt geregelt abgelassen werden. Damit kann eine Rekuperationseffizienz von Hybridelektrofahrzeugen (Hybrid Electronic Vehicle-Systemen, HEV-Systemen) optimiert werden. Insbesondere wird dabei eine Rekuperation bzw. Rückgewinnung von ansonsten verlorener Bremsenergie verbessert. Zudem können normale Regelalgorithmen für Antiblockiersysteme (ABS), Antriebsschlupfregelung (ASR) bzw. Traction Control System (TCS), adaptive Geschwindigkeitsregelung (Adaptive Cruise Control, ACC) und Elektronisches Stabilitätsprogramm (ESP) in ihrer Performance optimiert werden. Es kann genau der nötige Druck abgelassen werden, der als Druckabfall benötigt wird. Es hat sich herausgestellt, dass mit dem erfindungsgemäßen Pumpengehäuse und der damit verbundenen Regelung des Auslassventils optimale Systemkosten bei verbesserter Rekuperationseffizienz ermöglicht sind. Zusätzliche Kosten, die für die erfindungsgemäße Anpassung des Einlasses und gegebenenfalls einer damit verbundenen Leitung anfallen, werden durch ermöglichte Vereinfachungen im Design des Auslassventils bei weitem überkompensiert.

Erfindungsgemäß vorteilhaft weist die Auslassventilaufnahme eine Achse auf, entlang derer die Schließkraft wirkt, wenn das Auslassventil in der Auslassventilaufnahme aufgenommen ist. Dabei ist der Einlass axial zu der Achse angeordnet. Derart angeordnet, ist eine besonders gleichmäßige Kraftverteilung zwischen Auslassventilaufnahme und Auslassventil beim Einströmen des Bremsfluids durch den Einlass in das Auslassventil geschaffen. Der Einlass und insbesondere der daran angeordnete Ventileinlass sind zentral und zielgerichtet von dem Bremsfluid zu durchströmen, das entsprechend zentral und zielgerichtet mit seiner Strömungsrichtung gegen die auf den Schließkörper wirkende Schließkraft strömt. Insbesondere entspricht dabei die Achse der Auslassventilaufnahme der Längsachse der Auslassventilaufnahme entlang derer das Auslassventil mit seiner Längsachse angeordnet ist.

Ferner ist erfindungsgemäß vorteilhaft in der Auslassventilaufnahme das Auslassventil aufgenommen, das den Ventileinlass umfasst, der mit dem Schließkörper mit seiner zugehörigen Schließkraft zu verschließen ist. Dabei ist die Schließkraft mittels eines Federelements ausgeübt. Damit ist der Schließkörper mit dem Federelement gegen den Ventileinlass gedrängt und die Schließkraft ist vom Federelement bestimmt. Das Federelement weist eine Federkennlinie auf, die bevorzugt dazu adaptiert ist, dass ein Bremsdruck gezielt geregelt von dem Radbremszylinder mittels des Auslassventils abgelassen werden kann. Insbesondere ist dazu mittels des Federelements eine Durchflussmenge an Bremsfluid pro Zeiteinheit zu regeln. Mit dem Federelement ist das Auslassventil bautechnisch einfach gestaltet und kostengünstig regelbar. Insbesondere sind dazu keine andernfalls erforderlichen Umlenkbauteile notwendig. Zudem hat das derart regelbare Auslassventil gegenüber einem oftmals als Auslassventil verwendeten elektromagnetischen Schaltventil überhaupt erst den Vorteil der Regelbarkeit. Andernfalls kann mit einem herkömmlichen Schaltventil ein am Radbremszylinder angelegter Druck des Bremsfluids beim Auslassen von Bremsfluid aus dem Radbremszylinder nicht gezielt geregelt vermindert werden. Vielmehr tritt oftmals ein Überschwinger bzw. ein Überschwingen auf. Ein Wiedereinregeln mittels einfach regelbarer Einlassventile ist dann notwendig. Einlassventile sind in der Regel gegen einen Bremsfluidstrom mit Hilfe von Magnetkraft zu schließen und können damit einfach geregelt werden.

Des Weiteren sind erfindungsgemäß am Pumpengehäuse eine Motorseite zum Anordnen eines Antriebsmotors sowie eine der Motorseite gegenüberliegende Steuergeräteseite zum Anordnen eines Steuergeräts vorgesehen. Dabei ist der Einlass dazu angepasst, dass die der Schließkraft entgegengesetzte Strömungsrichtung zwischen der Motorseite und der Steuergeräteseite gerichtet ist. Eine solche Strömungsrichtung entspricht in ihrer axialen Erstreckung der herkömmlich üblichen axialen Erstreckung zwischen der Motorseite und der Steuergeräteseite. Damit sind nur geringfügige bauliche Anpassungen an dem Pumpengehäuse für den Einlass der Auslassventilaufnahme und das dort aufzunehmende Auslassventil notwendig. Das Pumpengehäuse kann in seinen Außenmaßen konstant gehalten werden und es können kostengünstig bestehende Bauräume insbesondere in einer Fahrzeugbremsanlage genutzt werden. Bevorzugt ist dabei die Strömungsrichtung von der Motorseite zu der Steuergeräteseite gerichtet. Damit ist die Strömungsrichtung an eine für ein zugehöriges Einlassventil übliche Strömungsrichtung angepasst. Entsprechend sind nur geringfügige Anpassungen notwendig. Angepasst an eine jeweilige Bausituation kann die Strömungsrichtung auch von der Steuergeräteseite zu der Motorseite gerichtet sein.

Zudem weist erfindungsgemäß vorteilhaft die Auslassventilaufnahme eine Achse auf, entlang derer die Schließkraft wirkt, wenn das Auslassventil in der Auslassventilaufnahme aufgenommen ist und ist eine zu der Auslassventilaufnahme gehörige Einlassventilaufnahme zum Aufnehmen eines Einlassventils zum Einlassen von Bremsfluid aus dem Pumpengehäuse in den Radbremszylinder vorgesehen, wobei die Einlassventilaufnahme einen Auslass zum Auslassen von Bremsfluid von dem Einlassventil zu dem Radbremszylinder aufweist. Dabei ist eine aus dem Auslass der Einlassventilaufnahme zu dem Radbremszylinder führende Verbindungsleitung vorgesehen, die dazu angepasst ist, dass das Einlassventil beim Einlassen von Bremsfluid zu dem Radbremszylinder und das Auslassventil beim Auslassen von Bremsfluid von dem Radbremszylinder in gleicher Strömungsrichtung in Bezug auf die Achse durchströmbar sind. Damit ist eine einheitliche Strömungsrichtung von Bremsfluid sowohl beim Einlassen von dem Pumpengehäuse in den Radbremszylinder als auch beim Auslassen aus dem Radbremszylinder in das Pumpengehäuse gewährleistet. Insbesondere ist dabei das Einlassventil wie herkömmlich von der Motorseite zu der Steuergeräteseite zu durchströmen. Zudem ist das Auslassventil nun ebenfalls von der Motorseite zu der Steuergeräteseite zu durchströmen. Derart durchströmt, ist das Bremsfluid mit seiner Strömungskraft axial gegen die auf den Schließkörper wirkende Schließkraft gerichtet. Damit kann das Auslassventil, wie bereits beschrieben, besonders einfach geregelt werden. Ist die Strömungsrichtung bevorzugt von der Motorseite zu der Steuergeräteseite gerichtet, wie es für das Einlassventil bekannt ist, so können weitestgehend die herkömmlichen Leitungen und Ventile verwendet werden. Es sind nur wenige Anpassungen erforderlich, damit eine große Wirkung vor allem hinsichtlich der Regelbarkeit des Auslassventils erzielt werden kann. Alternativ ist eine entsprechende Strömungsrichtung von der Steuergeräteseite zu der Motorseite möglich. Dazu ist der Auslass der Einlassventilaufnahme insbesondere dazu angepasst, das Bremsfluid beim Auslassen aus dem Einlassventil zunächst in einer Strömungsrichtung zu führen, die quer zu der der Schließkraft entgegengesetzt gerichteten Strömungsrichtung des Bremsfluids beim Einlassen in das Auslassventil gerichtet ist.

Erfindungsgemäß vorteilhaft ist dazu die Verbindungsleitung aus dem Auslass der Einlassventilaufnahme in einen zu dem Radbremszylinder gewandten Bereich der Auslassventilaufnahme geführt. Dabei ist der Auslass insbesondere fluidleitend mit einem Ventileinlass eines in der Einlassventilaufnahme aufgenommenen Einlassventils gekoppelt. Damit ist das Bremsfluid aus dem Einlassventil in den Bereich der Auslassventilaufnahme zu führen, der zu dem Radbremszylinder gewandt ist. Aus diesem Bereich ist das Bremsfluid durch eine Leitung bzw. Radbremszylinderleitung zum Einlassen in den Radbremszylinder geführt. Durch dieselbe Leitung und in denselben Bereich ist das Bremsfluid zum Auslassen aus dem Radbremszylinder durch den Einlass in die Auslassventilaufnahme und das dort aufgenommene Auslassventil geführt. Damit ist bautechnisch besonders einfach eine axial gleiche Strömungsrichtung des Bremsfluids durch das Einlassventil und durch das Auslassventil geschaffen.

Ferner ist die Verbindungsleitung erfindungsgemäß vorteilhaft aus dem Auslass der Einlassventilaufnahme in eine von dem Radbremszylinder zu dem Einlass der Auslassventilaufnahme führende Radbremszylinderleitung geführt. Dazu ist in der Radbremszylinderleitung insbesondere eine Verzweigung vorgesehen, in die die Verbindungsleitung geführt ist. Damit ist das Bremsfluid von dem Auslass mittels der Verbindungsleitung in die Radbremszylinderleitung geführt, mit der das Bremsfluid dann in den Radbremszylinder geführt ist. Zum Auslassen des Bremsfluids aus dem Radbremszylinder ist das Bremsfluid zurück durch die Radbremszylinderleitung und durch den Einlass der Auslassventilaufnahme in das darin aufgenommene Auslassventil geführt. Auch damit ist eine axial gleiche Strömungsrichtung des Bremsfluids durch das Einlassventil und durch das Auslassventil geschaffen. Zudem kann damit die Verbindungsleitung an eine entsprechende Anordnung und Geometrie der Einlassventilaufnahme und Auslassventilaufnahme angepasst werden. Es können beide Ventilaufnahmen platzsparend mit weniger Abstand zueinander angeordnet sein.

Dazu ist erfindungsgemäß vorteilhaft die Verbindungsleitung mit einem Leitungsabschnitt gestaltet, der schräg in Bezug auf die Achse geführt ist, entlang derer die Schließkraft wirkt. Insbesondere ist dabei die Achse die Längsachse der Auslassventilaufnahme. Mit dem schrägen Leitungsabschnitt ist die Einlassventilaufnahme von ihrem Auslass aus direkt und unmittelbar mit dem zum Radbremszylinder gewandten Bereich der Auslassventilaufnahme verbunden. Dabei treten keine Reibungsverluste mittels Leitungsumlenkungen auf. Zudem ist ein einziger schräger Leitungsabschnitt bautechnisch einfach herzustellen. Die Vorteile des schrägen Leitungsabschnitts sind auch erreicht bei einer entsprechend direkten Verbindung der Einlassventilaufnahme und der Radbremszylinderleitung. Dabei ist der schräge Leitungsabschnitt steiler gestaltet als der schräge Leitungsabschnitt, der den Auslass der Einlassventilaufnahme mit dem zum Radbremszylinder gewandten Bereich der Auslassventilaufnahme verbindet.

Ferner ist die Verbindungsleitung erfindungsgemäß vorteilhaft mit mindestens einem ersten Leitungsabschnitt und mit mindestens einem zweiten Leitungsabschnitt gestaltet. Dabei sind der einzelne erste Leitungsabschnitt parallel und der einzelne zweite Leitungsabschnitt im rechten Winkel jeweils in Bezug auf die Achse geführt, entlang derer die Schließkraft wirkt. Insbesondere ist dabei die Achse die Längsachse der Auslassventilaufnahme. Damit ist eine breite Variationsmöglichkeit für die Gestaltung der Verbindungsleitung geschaffen. Es können weitere Bauteile zwischen der Einlassventilaufnahme und der Auslassventilaufnahme im Pumpengehäuse vorgesehen sein. Um diese weiteren Bauteile kann das Bremsfluid mittels einer Verbindungsleitung, die eine entsprechende Kombination aus mindestens einem ersten und mindestens einem zweiten Leitungsabschnitt und/oder mindestens einem schrägen Leitungsabschnitt aufweist, problemlos herumgeleitet werden.

Des Weiteren ist die Verbindungsleitung vorteilhaft mit mindestens drei Leitungsabschnitten gestaltet, die sich im dreidimensionalen Raum erstreckend gestaltet sind. Derart gestaltet, ist eine noch größere Variationsmöglichkeit für ein Anpassen der Verbindungsleitung an bauliche Gegebenheiten im Pumpengehäuse geschaffen. Dabei sind die mindestens drei Leitungsabschnitte bevorzugt je nach Bedarf schräg, im rechten Winkel und/oder parallel in Bezug auf die Achse angeordnet, entlang derer die Schließkraft wirkt.

Zudem ist die Erfindung auf eine Verwendung eines solchen Pumpengehäuses in einem Hydraulikaggregat einer Fahrzeugbremsanlage gerichtet. Damit werden die bereits genannten Vorteile eines kostengünstigen regelbaren Auslassventils in Verbindung mit einer verbesserten Rekuperationseffizienz bei Fahrzeugbremssystemen, insbesondere bei HEV-Systemen, erzielt.

Nachfolgend werden Ausführungsbeispiele der erfindungsgemäßen Lösung anhand der beigefügten schematischen Zeichnungen näher erläutert. Es zeigt:
- Fig. 1: einen Hydraulikplan einer Fahrzeugbremsanlage gemäß dem Stand der Technik,
- Fig. 2: eine Prinzipdarstellung eines Ausschnitts eines Pumpengehäuses eines Kraftfahrzeug-Hydroaggregats gemäß dem Stand der Technik,
- Fig. 3: eine Prinzipdarstellung der Ansicht gemäß Fig. 2 eines ersten Ausführungsbeispiels des erfindungsgemäßen Pumpengehäuses,
- Fig. 4: eine vereinfachte Prinzipdarstellung des ersten Ausführungsbeispiels des erfindungsgemäßen Pumpengehäuses,
- Fig. 5: die Ansicht gemäß Fig. 4 eines zweiten Ausführungsbeispiels des erfindungsgemäßen Pumpengehäuses,
- Fig. 6: die Ansicht gemäß Fig. 4 eines dritten Ausführungsbeispiels des erfindungsgemäßen Pumpengehäuses, und
- Fig. 7: die Ansicht gemäß Fig. 4 eines vierten Ausführungsbeispiels des erfindungsgemäßen Pumpengehäuses.

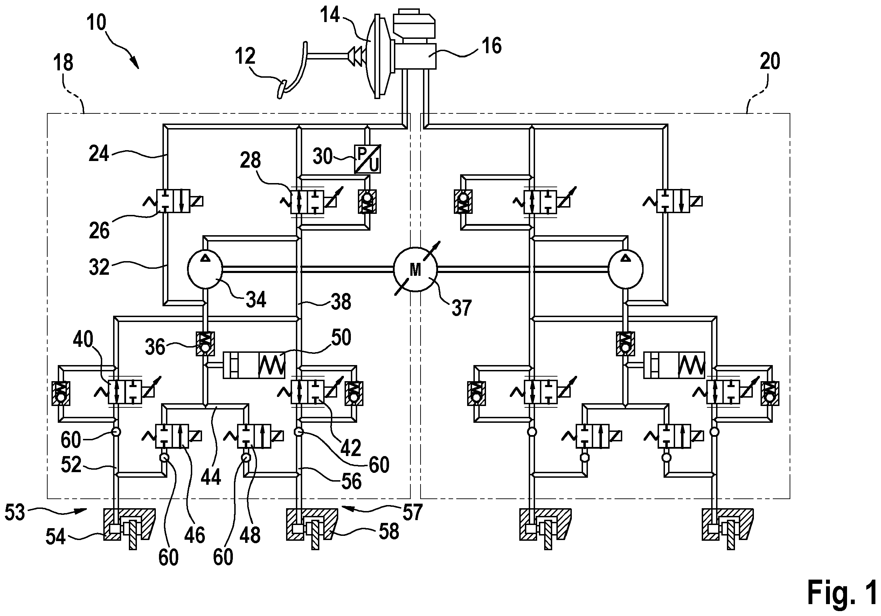

Dabei beziehen sich alle räumlichen Angaben, wie links, rechts, unten, oben, vertikal und horizontal auf eine Zeichenebene der jeweiligen Fig. 1 bis Fig. 7.

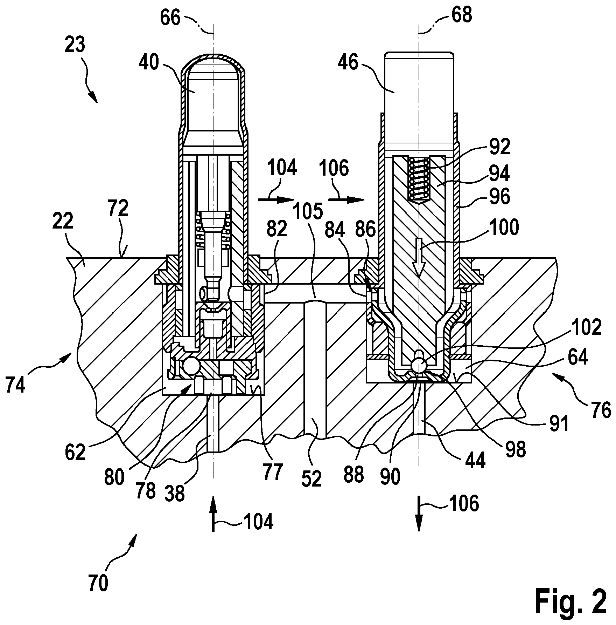

Eine in Fig. 1 dargestellte Fahrzeugbremsanlage 10 umfasst ein Bremspedal 12 mit einem Bremskraftverstärker 14 und einem daran angeschlossenen Hauptzylinder 16. Der Hauptzylinder 16 ist an zwei weitgehend baugleiche Bremskreise 18 und 20 angeschlossen, die im Wesentlichen in einem gemeinsamen Pumpengehäuse 22 eines Hydraulikaggregats 23 (siehe jeweils ausschnittsweise Fig. 2) angeordnet sind. Nachfolgend wird nur einer dieser Bremskreise, nämlich der Bremskreis 18, näher erläutert.

Für den Bremskreis 18 führt eine Leitung 24 vom Hauptzylinder 16 zu einem Hochdruckschaltventil 26 und einem Umschaltventil 28. An der Leitung 24 ist ferner ein Drucksensor 30 angeschlossen. Vom Hochdruckschaltventil 26 führt eine Leitung 32 zur Saugseite eines Pumpenelements 34 sowie zu einem Rückschlagventil 36. Dabei ist das Pumpenelement 34 kraftübertragend mit einem Antriebsmotor 37 gekoppelt. Vom Umschaltventil 28 führt eine Leitung 38 zur Druckseite des Pumpenelements 34 sowie zu einem ersten Einlassventil 40 und einem zweiten Einlassventil 42. Von dem Rückschlagventil 36 führt eine Leitung 44 zu einem ersten Auslassventil 46 und einem zweiten Auslassventil 48. An der Leitung 44 ist ferner ein Speicher 50 angeschlossen. Vom ersten Einlassventil 40 führt eine Leitung bzw. Radbremszylinderleitung 52 mittels eines Radbremszylinderanschlusses 53 zu einem ersten Radbremszylinder 54 sowie zum ersten Auslassventil 46. Vom zweiten Einlassventil 42 führt eine Leitung bzw. Radbremszylinderleitung 56 mittels eines Radbremszylinderanschlusses 57 zu einem zweiten Radbremszylinder 58 sowie zum zweiten Auslassventil 48. Die Einlassventile 40 und 42 sowie Auslassventile 46 und 48 sind mit je einem Filterelement 60 vor dem Eintrag von Partikeln zu den zugehörigen funktionsrelevanten Teilen der Ventile geschützt. Die Filterelemente 60 befinden sich dabei unmittelbar an den Ventilen jeweils an der dem Radbremszylinder 54 bzw. 58 zugewandten Seite in den Leitungen 52 bzw. 56.

In Fig. 2 ist ausschnittsweise das Pumpengehäuse 22 des Hydraulikaggregats 23 dargestellt, das als blockförmiges Gehäuse bzw. Hydraulikblock im Wesentlichen aus einem Aluminiumblock gebildet ist, in dem mittels Bohren bzw. Fräsen Öffnungen bzw. Aufnahmen ausgebildet sind. Dabei sind beispielhaft nur das erste Einlassventil 40 und das erste Auslassventil 46 dargestellt, die zum ersten Radbremszylinder 54 gehören. Nachfolgende Erläuterungen gelten entsprechend für alle weiteren Einlassventile 42 und jeweils zugehörigen Auslassventile 48 des Hydraulikaggregats 23. Dabei wird im Folgenden das erste Einlassventil 40 als Einlassventil 40 und das erste Auslassventil 46 als Auslassventil 46 bezeichnet.

Das Einlassventil 40 ist in einer als Einlassventilbohrung gestalteten, becherförmigen Einlassventilaufnahme 62 und das Auslassventil 46 in einer als Auslassventilbohrung gestalteten, becherförmigen Auslassventilaufnahme 64 aufgenommen. Dabei hat die Einlassventilaufnahme 62 eine Längsachse bzw. Achse 66, entlang derer das Einlassventil 40 mit seiner Längserstreckung angeordnet und die Auslassventilaufnahme 64 eine Längsachse bzw. Achse 68, entlang derer das Auslassventil 46 mit seiner Längserstreckung angeordnet ist.

Ferner umfasst das Pumpengehäuse 22 eine Motorseite 70 zum Anordnen des Antriebsmotors 37 und eine der Motorseite 70 gegenüberliegende Steuergeräteseite 72, an der ein nicht dargestelltes Steuergerät (Electronic Control Unit (ECU)) anzuordnen ist. An der Steuergeräteseite 72 sind zwei Öffnungen vorgesehen, die die Einlassventilaufnahme 62 und die Auslassventilaufnahme 64 bilden, deren Achsen 66 und 68 parallel zueinander und im rechten Winkel zur Steuergeräteseite 72 orientiert sind. Zudem befindet sich rechts am Pumpengehäuse 22 eine weiter nicht dargestellte Radbremszylinderseite bzw. Seite 74 in der vier Radbremszylinderöffnungen vorgesehen sind. Darin ist jeweils der Radbremszylinderanschluss 53 sowie 57 für die Radbremszylinder 54 sowie 58 aufzunehmen. Der Seite 74 gegenüberliegend befindet sich eine Seite 76, in der zwei nicht dargestellte Speicheröffnungen jeweils zum Aufnehmen des Speichers 50 vorgesehen sind.

An der Einlassventilaufnahme 62 ist unten bzw. an einem Becherboden 77 der Einlassventilaufnahme 62 bzw. zur Motorseite 70 gerichtet ein Einlass 78 vorgesehen, in den die Leitung 38 geführt ist. Durch den Einlass 78 ist Bremsfluid in das Einlassventil 40 durch dessen Ventileinlass 80 geführt. Ferner ist an der Einlassventilaufnahme 62 seitlich oben bzw. in Richtung der Steuergeräteseite 72 ein Auslass 82 angeordnet, aus dem die Leitung 52 zum Radbremszylinder 54 führt.

Vom Radbremszylinder 54 führt die Leitung 52 in einen Einlass 84 der Auslassventilaufnahme 64, der seitlich oben bzw. in Richtung der Steuergeräteseite 72 an der Auslassventilaufnahme 64 angeordnet ist. Entsprechend ist am Auslassventil 46 ebenfalls seitlich oben ein Ventileinlass 86 angeordnet, durch den mittels des Einlasses 84 das Bremsfluid aus der Leitung 52 in das Auslassventil 46 geführt ist. Zum Auslassen des Bremsfluids in die Leitung 44 ist am Auslassventil 46 ein Ventilauslass 88 vorgesehen, an dem ein Auslass 90 der Auslassventilaufnahme 64 angeordnet ist. Sowohl der Ventilauslass 88 als auch der Auslass 90 sind unten bzw. an einem Becherboden 91 der Auslassventilaufnahme 64 bzw. in Richtung der Motorseite 70 positioniert.

Das Auslassventil 46 ist ein Elektromagnetventil, das mittels einer mechanischen Feder bzw. einem Federelement 92 stromlos geschlossen ist. Mit einem Anlegen von elektrischem Strom kann das Auslassventil 46 geöffnet werden. Dazu umfasst das Auslassventil 46 einen Ventilstößel 94, der von einer Hülse 96 umgeben und mittels des Federelements 92 gegen einen Ventilsitz 98 federnd vorgespannt ist. Das Federelement 92 übt eine Schließkraft 100 aus, die mit ihrem Kraftvektor entlang einer Achse des Auslassventils 46 wirkt, die vorliegend der Längsachse bzw. Achse 68 der Auslassventilaufnahme 64 entspricht. Mit der Schließkraft 100 ist ein an den Ventilstößel 94 gekoppelter Schließkörper 102 gegen den Ventilsitz 98 gedrängt. Damit ist der von dem Ventilsitz 98 umringte Ventileinlass 88 bzw. die Ventilöffnung verschlossen. Der Schließkörper 102 und der Ventilstößel 94 können aus dieser Lage mittels einer den Ventilstößel 94 teilweise umgebenden, nicht dargestellten, elektromagnetischen Spule vom Ventilsitz 98 abgehoben werden, um einen Strömungsweg durch das Auslassventil 46 bereitzustellen. Dieser Strömungsweg hat einen konstanten Öffnungsquerschnitt. Damit kann ein am Radbremszylinder 54 angelegter Bremsdruck beim Auslassen von Bremsfluid aus dem Radbremszylinder 54 nicht gezielt geregelt vermindert werden. Vielmehr kann ein Überschwingen auftreten, das ein Wiedereinregeln mittels einfach regelbarer Einlassventile 40 notwendig macht. Beim Abschalten der Magnetkraft ist das Auslassventil 46 mit der auf den Schließkörper 102 mittels des Federelements 92 wirkenden Schließkraft 100 zu verschließen.

Beim Einlassen von Bremsfluid in den Radbremszylinder 54 strömt das Bremsfluid aus der Leitung 38 in einer Einlass-Strömungsrichtung 104 durch das Einlassventil 40 hindurch. Dabei ist die Einlass-Strömungsrichtung 104 mit der Anordnung des Einlasses 78 bzw. Ventileinlasses 80 und der Anordnung des Auslasses 82 von der Motorseite 70 zu der Steuergeräteseite 72 festgelegt. Aus dem Auslass 82 strömt das Bremsfluid horizontal bzw. seitlich durch die Leitung 52 in Richtung des Einlasses 84 bzw. des Ventileinlasses 86 des Auslassventils 46. Die Leitung 52 dient hier als Zwischenverbindung zwischen der Einlassventilaufnahme 62 und der Auslassventilaufnahme 64. Bei geschlossenem Auslassventil 46 strömt dabei das Bremsfluid durch die Leitung 52 mittels einer Verzweigung 105 zum Radbremszylinder 54 und übt dort einen Bremsdruck auf die zugehörige Radbremse aus.

Zum Reduzieren bzw. Ablassen des Bremsdrucks am Radbremszylinder 54 bzw. Auslassen des Bremsfluids aus dem Radbremszylinder 54 wird das Auslassventil 46 durch Anlegen von elektrischem Strom geöffnet. Das Bremsfluid strömt dann aus dem Radbremszylinder 54 durch die Leitung 52 in einer Auslass-Strömungsrichtung 106 durch das Auslassventil 46 hindurch. Dabei ist die Auslass-Strömungsrichtung 106 mit der Anordnung des Einlasses 84 bzw. Ventileinlasses 86 und der Anordnung des Auslasses 90 bzw. Ventilauslasses 88 festgelegt. Damit strömt das Bremsfluid seitlich oben durch den Einlass 84 bzw. Ventileinlass 86 des Auslassventils 46 und nach unten durch den Ventilauslass 88 bzw. Auslass 90 in die Leitung 44. Die Auslass-Strömungsrichtung 106 verläuft also in Bezug auf die Achse 68 von der Steuergeräteseite 72 zu der Motorseite 70 und damit entgegengesetzt zur Einlass-Strömungsrichtung 104 in Bezug auf die Achsen 66 bzw. 68. Ferner strömt beim Einlassen von Bremsfluid durch den Einlass 84 bzw. Ventileinlass 86 in das Auslassventil 46 das Bremsfluid in der Auslass-Strömungsrichtung 106 quer zur Achse 68 und damit quer zur Schließkraft 100, die mittels des Federelements 92 auf den Schließkörper 102 wirkt. Damit ist das Auslassventil 46 ohne weitere Maßnahmen nicht regelbar, sondern nur schaltbar.

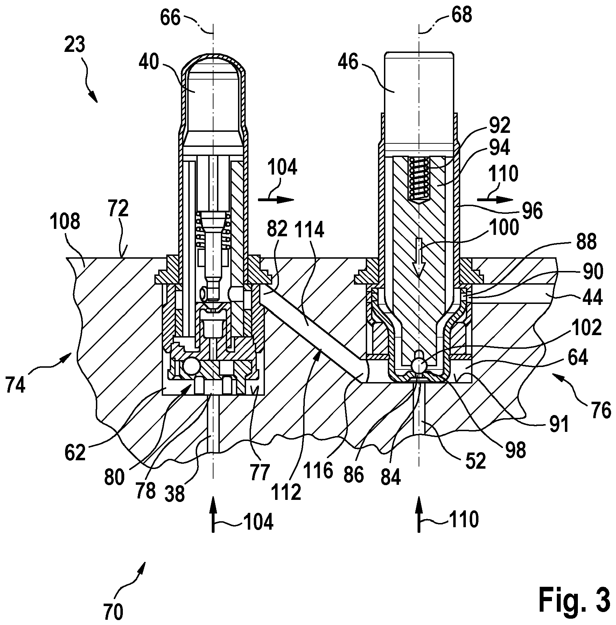

Fig. 3 bis Fig. 7 zeigen Ausführungsbeispiele eines Pumpengehäuses 108, das zum großen Teil Bauteile mit gleichen Funktionen wie das Pumpengehäuse 22 aufweist. Entsprechend sind diese Bauteile mit gleichen Bezugszeichen versehen.

Im Unterschied zum Pumpengehäuse 22 ist beim Pumpengehäuse 108 der Einlass 84 der Auslassventilaufnahme 64 unten bzw. am Boden der becherförmigen Auslassventilaufnahme 64 bzw. in Richtung zur Motorseite 70 positioniert. Der Einlass 84 ist dabei konzentrisch zum Querschnitt der Auslassventilaufnahme 64 und damit axial zur Achse 68 angeordnet. Zudem ist der Einlass 84 mit der Leitung 52 verbunden, in der das Bremsfluid von dem Radbremszylinder 54 zu der Auslassventilaufnahme 64 geführt ist. Ferner ist bei dem in der Auslassventilaufnahme 64 aufgenommenem Auslassventil 46 der Ventileinlass 86 dem Einlass 84 entsprechend bzw. am Einlass 84 angeordnet. Derart angeordnet, strömt das Bremsfluid beim Einlassen durch den Ventileinlass 86 in das Auslassventil 46 entlang der Achse 68 in einer Strömungsrichtung 110, die axial gegen die Schließkraft 100 wirkt. Damit ist der Einlass 84 dazu angepasst, dass das Bremsfluid beim Einlassen in das Auslassventil 46 axial gegen die Schließkraft 100 wirkend geführt ist, die das Federelement 92 auf den Schließkörper 102 ausübt. Dabei ist das Federelement 92 als Schraubenfeder gestaltet, deren Federkennlinie dazu angepasst ist, den Bremsdruck gezielt geregelt von dem Radbremszylinder 54 mittels des Auslassventils 46 abzulassen.

Zum Auslassen des Bremsfluids aus dem Auslassventil 46 ist der Ventilauslass 88 und der zugehörige Auslass 90 der Auslassventilaufnahme 64 seitlich oben rechts in Richtung zur Steuergeräteseite 72 angeordnet. Entsprechend strömt das Bremsfluid beim Auslassen aus dem Radbremszylinder 54 vom Einlass 84 zum Auslass 90 in der Strömungsrichtung 110 bzw. Auslass-Strömungsrichtung von der Motorseite 70 zu der Steuergeräteseite 72. Dabei ist beim Einlassen in das Auslassventil 46 die Strömungsrichtung 110 in Bezug auf die Achse 68 zur Schließkraft 100 entgegengesetzt gerichtet.

Ferner ist eine Verbindungsleitung 112 bzw. Verbindungsbohrung bzw. ein Verbindungskanal vorgesehen, die bzw. der aus der Einlassventilaufnahme 62 in Richtung der Auslassventilaufnahme 64 führt. Dazu führt die Verbindungsleitung 112 aus dem seitlich oben rechts bzw. in Richtung der Steuergeräteseite 72 angeordneten Auslass 82 der Einlassventilaufnahme 62 aus dem Einlassventil 40 hinaus. Zudem führt die Verbindungsleitung 112 zum Radbremszylinder 54.

Derart geführt, strömt beim Einlassen des Bremsfluids in den Radbremszylinder 54 das Bremsfluid durch das Einlassventil 40 in der Einlass-Strömungsrichtung 104 von der Motorseite 70 zu der Steuergeräteseite 72. Dann strömt das Bremsfluid durch die Verbindungsleitung 112 in den Radbremszylinder 54 und von dort durch die Leitung 52 durch das Auslassventil 46 in der Auslass-Strömungsrichtung 110 von der Motorseite 70 zu der Steuergeräteseite 72. Dabei sind die Einlass-Strömungsrichtung 104 und die Auslass-Strömungsrichtung 110 zumindest in Bezug auf die Achse 68 gleichgerichtet. Damit sind also mittels der Verbindungsleitung 112 das Einlassventil 40 und das Auslassventil 46 in gleicher Strömungsrichtung 104 und 110 in Bezug auf die Achse 68 durchströmt.

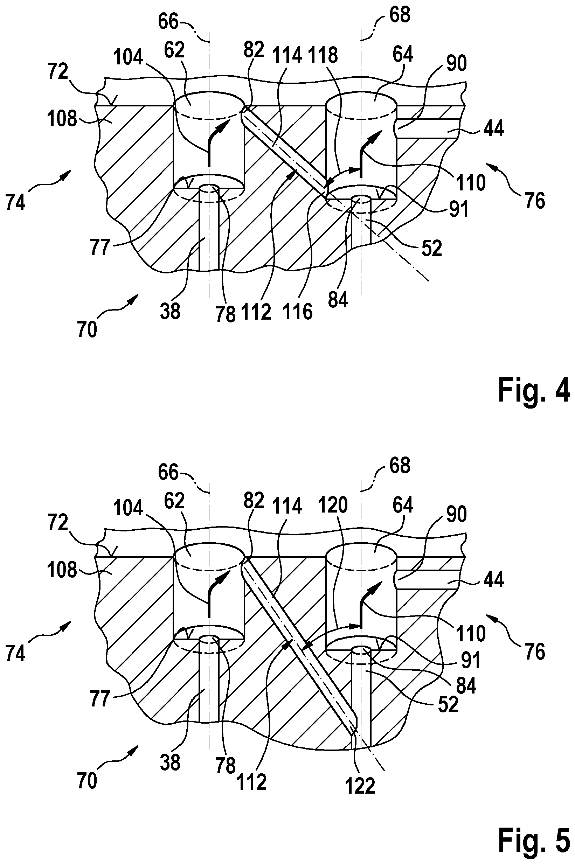

Dazu kann die Verbindungsleitung 112 unterschiedliche Ausführungsformen aufweisen, die in'den Fig. 4 bis 7 rein schematisch und zur besseren Übersicht ohne Auslassventil 40 und Einlassventil 46 dargestellt sind.

Gemäß Fig. 3 und 4 ist die Verbindungsleitung 112 als Leitungsabschnitt 114 gestaltet, der schräg zur Achse 68 der Auslassventilaufnahme 64 verläuft. Dabei schließen der Leitungsabschnitt 114 und die Achse 68 einen spitzen Winkel 118 ein. Zudem ist die Verbindungsleitung 112 in einen zum Radbremszylinder 54 gewandten Bereich 116 der Auslassventilaufnahme 64 geführt. Der Bereich 116 ist dabei unten bzw. am Becherboden 91 angeordnet. Von dem Bereich 116 ist das Bremsfluid dann aus der Auslassventilaufnahme 64 durch die Leitung 52 in den Radbremszylinder 54 zum Einlassen des Bremsfluids in den Radbremszylinder 54 geleitet. Zum Auslassen des Bremsfluids aus dem Radbremszylinder 54 ist das Bremsfluid aus dem Radbremszylinder 54 durch dieselbe Leitung 52 von unten in die Auslassventilaufnahme 64 und das darin angeordnete Auslassventil 46 geführt. Damit ist die Verbindungsleitung 112 als einfache direkte Schrägbohrung gestaltet.

Gemäß Fig. 5 ist die Verbindungsleitung 112 ebenfalls aus einem Leitungsabschnitt 114 gestaltet, der schräg in Bezug auf die Achse 68 geführt ist. Dabei ist ein zwischen der Verbindungsleitung 112 und der Achse 68 eingeschlossener spitzer Winkel 120 kleiner als der spitze Winkel 118. Damit ist die Verbindungsleitung 112 steiler angeordnet als bei dem Ausführungsbeispiel gemäß Fig. 4. Zudem ist die Verbindungsleitung 112 an einer Verzweigung 122 direkt in die Leitung 52 geführt. Damit ist die Verbindungsleitung 112 als einfache direkte und steilere Schrägbohrung derart gestaltet, dass der Abstand von Einlassventil 40 und Auslassventil 46 geringer als beim Ausführungsbeispiel gemäß Fig. 4 sein kann. Dabei befindet sich die Leitung 52 unterhalb der Auslassventilaufnahme 64 bzw. in Richtung zur Motorseite 70. Ferner ist die Leitung 52 vorliegend als Radanschlussbohrung bzw. Radkanal gestaltet.

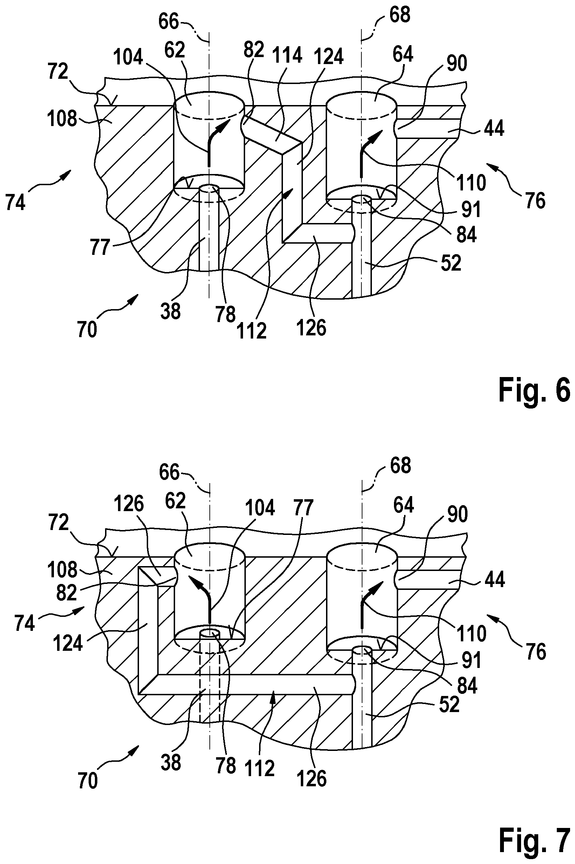

Fig. 6 zeigt die Verbindungsleitung 112, die vom Auslass 82 der Einlassventilaufnahme 62 ausgehend mit einem in Bezug auf die Achse 68 schrägen Leitungsabschnitt 114, einem in Bezug auf die Achse 68 parallel angeordneten ersten Leitungsabschnitt 124 und einem in Bezug auf die Achse 68 im rechten Winkel angeordneten zweiten Leitungsabschnitt 126 gestaltet ist. Dabei ist der zweite Leitungsabschnitt 126 an der Verzweigung 122 mit der Leitung 52 fluidleitend verbunden. In Bezug auf Fig. 6 verläuft dabei der erste Leitungsabschnitt 124 vertikal und der zweite Leitungsabschnitt 126 horizontal.

Fig. 7 zeigt die Verbindungsleitung 112, die vom Auslass 82 ausgehend mit einem ersten horizontalen zweiten Leitungsabschnitt 126, einem vertikalen ersten Leitungsabschnitt 124 und einem zweiten horizontalen zweiten Leitungsabschnitt 126 gestaltet ist. Dabei führt der zweite horizontale Leitungsabschnitt 126 an der Verzweigung 122 in die Leitung 52. Ferner ist dabei der Auslass 82 von der Auslassventilaufnahme 64 weggerichtet bzw. in Richtung zur Radbremszylinderseite 74 gewandt an der Einlassventilaufnahme 62 angeordnet. Damit ist zwischen Einlassventil 40 und Auslassventil 46 Raum geschaffen, in dem weitere Bauelemente im Pumpengehäuse 108 integriert werden können, wie zum Beispiel ein Hochdruckschaltventil.

Dabei liegen in allen Ausführungsbeispielen gemäß Fig. 3 bis Fig. 7 alle Leitungsabschnitte 114, 124 und 126 in einer Ebene und erstrecken sich damit im zweidimensionalen Raum. In weiter nicht dargestellten Ausführungsformen erstrecken sich die Leitungsabschnitte 114, 124, 126 im dreidimensionalen Raum zwischen dem Auslass 82 und der Verzweigung 122 bzw. dem Bereich 116.

Zusammengefasst ist im als Hydraulikblock gestalteten Pumpengehäuse 108 eine Verbohrung vor allem hinsichtlich der Verbindungsleitung 112, des Einlasses 84 und des Auslasses 90 der Auslassventilaufnahme 64 derart geändert, dass ein vereinfachtes und damit kostenoptimales Design eines regelbaren Auslassventils 46 ermöglicht ist. Ein Mehraufwand durch erforderliche Bohrungen und Schrägbohrungen ist dabei durch das vereinfachte Design des regelbaren Auslassventils 46 bei weitem überkompensiert.

## Patentansprüche

1. Pumpengehäuse (108) eines Hydraulikaggregats (23) einer Fahrzeugbremsanlage (10) mit mindestens einem Radbremszylinderanschluss (53, 57) zum Anschließen eines Radbremszylinders (54, 58) an dem Pumpengehäuse (108), mit einer zum einzelnen Radbremszylinderanschluss (53, 57) gehörigen Auslassventilaufnahme (64) zum Aufnehmen eines Auslassventils (46, 48), das zum Auslassen von Bremsfluid aus dem Radbremszylinder (54) in das Pumpengehäuse (108) vorgesehen ist und einen Ventileinlass (86) umfasst, der mit einem Schließkörper (102) mit einer zugehörigen Schließkraft (100) zu verschließen ist, wobei die Auslassventilaufnahme (64) einen Einlass (84) zum Einlassen von Bremsfluid von dem Radbremszylinder (54) in das Auslassventil (46) aufweist, **dadurch gekennzeichnet, dass** der Einlass (84) dazu angepasst ist, das Bremsfluid beim Einlassen in das Auslassventil (46) in einer zur Schließkraft (100) entgegengesetzt gerichteten Strömungsrichtung (110) zu führen, wenn das Auslassventil (46) in der Auslassventilaufnahme (64) aufgenommen ist, wobei am Pumpengehäuse (108) eine Motorseite (70) zum Anordnen eines Antriebsmotors (37) sowie eine der Motorseite (70) gegenüberliegende Steuergeräteseite (72) zum Anordnen eines Steuergeräts vorgesehen sind und der Einlass (84) dazu angepasst ist, dass die der Schließkraft (100) entgegengesetzte Strömungsrichtung (110) zwischen der Motorseite (70) und der Steuergeräteseite (72) gerichtet ist.

2. Pumpengehäuse nach Anspruch 1,
**dadurch gekennzeichnet, dass** die Auslassventilaufnahme (64) eine Achse (68) aufweist, entlang derer die Schließkraft (100) wirkt, wenn das Auslassventil (46) in der Auslassventilaufnahme (64) aufgenommen ist und der Einlass (84) axial zu der Achse (68) angeordnet ist.

3. Pumpengehäuse nach Anspruch 1 oder 2,
**dadurch gekennzeichnet, dass** in der Auslassventilaufnahme (64) das Auslassventil (46) aufgenommen ist, das den Ventileinlass (86) umfasst, der mit dem Schließkörper (102) mit seiner zugehörigen Schließkraft (100) zu verschließen ist und die Schließkraft (100) mittels eines Federelements (92) ausgeübt ist.

4. Pumpengehäuse nach einem der Ansprüche 2 bis 3,
**dadurch gekennzeichnet, dass** eine zu der Auslassventilaufnahme (64) gehörige Einlassventilaufnahme (62) zum Aufnehmen eines Einlassventils (40) zum Einlassen von Bremsfluid aus dem Pumpengehäuse (108) in den Radbremszylinder (54) vorgesehen ist, wobei die Einlassventilaufnahme (62) einen Auslass (82) zum Auslassen von Bremsfluid von dem Einlassventil (40) zu dem Radbremszylinder (54) aufweist, sowie eine aus dem Auslass (82) der Einlassventilaufnahme (62) zu dem Radbremszylinder (54) führende Verbindungsleitung (112) vorgesehen ist, die dazu angepasst ist, dass das Einlassventil (40) beim Einlassen von Bremsfluid zu dem Radbremszylinder (54) und das Auslassventil (46) beim Auslassen von Bremsfluid von dem Radbremszylinder (54) in gleicher Strömungsrichtung (104, 110) in Bezug auf die Achse (68) durchströmbar sind.

5. Pumpengehäuse nach Anspruch 4,
**dadurch gekennzeichnet, dass** die Verbindungsleitung (112) in einen zu dem Radbremszylinder (54) gewandten Bereich (116) der Auslassventilaufnahme (64) geführt ist.

6. Pumpengehäuse nach Anspruch 4,
**dadurch gekennzeichnet, dass** die Verbindungsleitung (112) in eine von dem Radbremszylinder (54) zu dem Einlass (84) der Auslassventilaufnahme (64) führende Radbremszylinderleitung (52) geführt ist.

7. Pumpengehäuse nach einem der Ansprüche 4 bis 6,
**dadurch gekennzeichnet, dass** die Verbindungsleitung (112) mit einem Leitungsabschnitt (114) gestaltet ist, der schräg in Bezug auf die Achse (68) geführt ist.

8. Pumpengehäuse nach einem der Ansprüche 4 bis 7,
**dadurch gekennzeichnet, dass** die Verbindungsleitung (112) mit mindestens einem ersten Leitungsabschnitt (124) und mit mindestens einem zweiten Leitungsabschnitt (126) gestaltet ist, wobei der einzelne erste Leitungsabschnitt (124) parallel und der einzelne zweite Leitungsabschnitt (126) im rechten Winkel jeweils in Bezug auf die Achse (68) geführt ist.

9. Verwendung eines Pumpengehäuses nach einem der Ansprüche 1 bis 8 in einem Hydraulikaggregat (23) einer Fahrzeugbremsanlage (10).

## Claims

1. Pump housing (108) of a hydraulic assembly (23) of a vehicle brake system (10), having at least one wheel-brake-cylinder connection (53, 57) for connection of a wheel-brake cylinder (54, 58) to the pump housing (108), having an outlet-valve receptacle (64), associated with an individual wheel-brake-cylinder connection (53, 57), for accommodating an outlet valve (46, 48) which is intended for discharging brake fluid from the wheel-brake cylinder (54) into the pump housing (108) and comprises a valve inlet (86) which is to be closed off by a closing body (102) by way of an associated closing force (100), wherein the outlet-valve receptacle (64) has an inlet (84) for admission of brake fluid from the wheel-brake cylinder (54) into the outlet valve (46), **characterized in that** the inlet (84) is adapted to guide the brake fluid, during admission into the outlet valve (46), in a flow direction (110) directed counter to the closing force (100) when the outlet valve (46) is accommodated in the outlet-valve receptacle (64), wherein, at the pump housing (108), provision is made of a motor side (70) for arrangement of a drive motor (37) and of a control-device side (72), situated opposite the motor side (70), for arrangement of a control device and the inlet (84) is adapted such that the flow direction (110) counter to the closing force (100) is directed between the motor side (70) and the control-device side (72).

2. Pump housing according to Claim 1,
**characterized in that** the outlet-valve receptacle (64) has an axis (68) along which the closing force (100) acts when the outlet valve (46) is accommodated in the outlet-valve receptacle (64) and the inlet (84) is arranged axially in relation to the axis (68).

3. Pump housing according to Claim 1 or 2, **characterized in that** the outlet-valve receptacle (64) accommodates the outlet valve (46) which comprises the valve inlet (86) which is to be closed off by the closing body (102) by way of the associated closing force (100) thereof, and the closing force (100) is exerted by means of a spring element (92).

4. Pump housing according to either of Claims 2 and 3, **characterized in that** provision is made of an inlet-valve receptacle (62), associated with the outlet-valve receptacle (64), for accommodating an inlet valve (40) for admitting brake fluid from the pump housing (108) into the wheel-brake cylinder (54), wherein the inlet-valve receptacle (62) has an outlet (82) for discharge of brake fluid from the inlet valve (40) to the wheel-brake cylinder (54), and provision is made of a connecting line (112) which leads from the outlet (82) of the inlet-valve receptacle (62) to the wheel-brake cylinder (54) and which is adapted such that the inlet valve (40), during admission of brake fluid to the wheel-brake cylinder (54), and the outlet valve (46), during discharge of brake fluid from the wheel-brake cylinder (54), are able to be flowed through in the same flow direction (104, 110) in relation to the axis (68).

5. Pump housing according to Claim 4,
**characterized in that** the connecting line (112) is led into a region (116) of the outlet-valve receptacle (64) that faces the wheel-brake cylinder (54).

6. Pump housing according to Claim 4,
**characterized in that** the connecting line (112) is led into a wheel-brake-cylinder line (52) which leads from the wheel-brake cylinder (54) to the inlet (84) of the outlet-valve receptacle (64).

7. Pump housing according to one of Claims 4 to 6, **characterized in that** the connecting line (112) is formed with a line portion (114) which is led obliquely in relation to the axis (68).

8. Pump housing according to one of Claims 4 to 7, **characterized in that** the connecting line (112) is formed with at least one first line portion (124) and with at least one second line portion (126), wherein the individual first line portion (124) is led in a parallel manner, and the individual second line portion (126) is led at a right angle, in relation to the axis (68) in each case.

9. Use of a pump housing according to one of Claims 1 to 8 in a hydraulic assembly (23) of a vehicle brake system (10).

## Revendications

1. Corps de pompe (108) d'une unité hydraulique (23) d'un système de freinage de véhicule (10) comprenant au moins un raccord de cylindre de frein de roue (53, 57) destiné à raccorder un cylindre de frein de roue (54, 58) au corps de pompe (108), un logement de soupape de sortie (64) associé au raccord de cylindre de frein de roue individuel (53, 57) et destiné à recevoir une soupape de sortie (46, 48) qui est prévue pour évacuer le liquide de frein depuis le cylindre de frein de roue (54) jusque dans le corps de pompe (108) et qui comprend une entrée de soupape (86) qui doit être fermée avec un corps de fermeture (102) avec une force de fermeture associée (100), le logement de soupape de sortie (64) comportant une entrée (84) destinée à introduire le liquide de frein provenant du cylindre de frein de roue (54) dans la soupape de sortie (46),
**caractérisé en ce que** l'entrée (84) est adaptée pour guider le liquide de frein lors de l'introduction dans la soupape de sortie (46) dans un sens d'écoulement (110) qui est opposé à celui de la force de fermeture (100) lorsque la soupape de sortie (46) est reçue dans le logement de soupape de sortie (64), un côté moteur (70) destiné à disposer un moteur d'entraînement (37) et un côté dispositif de commande (72) opposé au côté moteur (70) et destiné à disposer un dispositif de commande étant prévus sur le corps de pompe (108), et l'entrée (84) étant adaptée pour diriger le sens d'écoulement (110), opposé à celui de la force de fermeture (100), entre le côté moteur (70) et le côté dispositif de commande (72).

2. Corps de pompe selon la revendication 1, **caractérisé en ce que** le logement de soupape de sortie (64) comporte un axe (68) le long duquel la force de fermeture (100) agit lorsque la soupape de sortie (46) est reçue dans le logement de soupape de sortie (64) et que l'entrée (84) est disposée axialement à l'axe (68).

3. Corps de pompe selon la revendication 1 ou 2, **caractérisé en ce que** la soupape de sortie (46) est reçue dans le logement de soupape de sortie (64) et comprend l'entrée de soupape (86) qui doit être fermée avec le corps de fermeture (102) avec la force de fermeture associée (100) de celui-ci et la force de fermeture (100) est exercée à l'aide d'un élément à ressort (92).

4. Corps de pompe selon l'une des revendications 2 à 3, **caractérisé en ce qu'**un logement de soupape d'entrée (62) appartenant au logement de soupape de sortie (64) est prévu pour recevoir une soupape d'entrée (40) destinée à introduire du liquide de frein provenant du corps de pompe (108) dans le cylindre de frein de roue (54), le logement de soupape d'entrée (62) comportant une sortie (82) destinée à évacuer le liquide de frein de la soupape d'entrée (40) vers le cylindre de frein de roue (54), et une conduite de liaison (112) qui va de la sortie (82) du logement de soupape d'entrée (62) au cylindre de frein de roue (54) étant prévue qui est adaptée de façon à permettre un écoulement à travers la soupape d'entrée (40) lors de l'introduction de liquide de frein dans le cylindre de frein de roue (54), et à travers la soupape de sortie (46) lors de l'évacuation de liquide de frein du cylindre de frein de roue (54), dans le même sens d'écoulement (104, 110) par rapport à l'axe (68).

5. Corps de pompe selon la revendication 4, **caractérisé en ce que** la conduite de liaison (112) s'étend jusque dans une zone (116) du logement de soupape de sortie (64) qui est dirigée vers le cylindre de frein de roue (54).

6. Corps de pompe selon la revendication 4, **caractérisé en ce que** la conduite de liaison (112) s'étend jusque dans une conduite de cylindre de frein de roue (52) qui va du cylindre de frein de roue (54) à l'entrée (84) du logement de soupape de sortie (64).

7. Corps de pompe selon l'une des revendications 4 à 6, **caractérisé en ce que** la conduite de liaison (112) est conçue avec une portion de conduite (114) qui s'étend obliquement par rapport à l'axe (68).

8. Corps de pompe selon l'une des revendications 4 à 7, **caractérisé en ce que** la conduite de liaison (112) est conçue avec au moins une première portion de conduite (124) et avec au moins une deuxième portion de conduite (126), la première portion de conduite individuelle (124) s'étendant parallèlement, et la deuxième portion de conduite individuelle (126) s'étendant perpendiculairement, à l'axe (68).

9. Utilisation d'un corps de pompe selon l'une des revendications 1 à 8 dans une unité hydraulique (23) d'un système de freinage de véhicule (10).
